Europäisches Patentamt

European Patent Office

Office européen des brevets

(11) Publication number: **0 424 345 A1**

## (12) EUROPEAN PATENT APPLICATION

(21) Application number: **90850339.4**

(22) Date of filing: **17.10.90**

(51) Int. Cl.⁵: **B62D 59/00, B62D 53/00, B60K 17/346**

(30) Priority: **20.10.89 SE 8903485**

(43) Date of publication of application:
**24.04.91 Bulletin 91/17**

(84) Designated Contracting States:
**AT DE ES FR GB IT**

(71) Applicant: **Hägglunds Vehicle AB**

**S-891 82 Oernsköldsvik(SE)**

(72) Inventor: **Andersson, Björn
Södervägen 65
S- 891 42 Ornsköldsvik(SE)**

(74) Representative: **Kierkegaard, Lars-Olov et al
H. ALBIHNS PATENTBYRA AB P.O. Box 3137
S-103 62 Stockholm(SE)**

(54) **A method for facilitating the control of a centre-steered articulated vehicle and a centre-steered articulated vehicle herefor.**

(57) The present invention relates to a method for facilitating steering of a centre-steered articulated vehicle comprising a front and a rear vehicle part, which are centre-steered articulated about a common pivot journal and both of which include drive means (F, B). According to the invention, the drive means (F) of the front vehicle part are driven with a greater drive force than the drive means (B) of the rear vehicle part.

The invention also relates to a centre-steered articulated vehicle in which the inventive method is applied.

# A METHOD FOR FACILITATING THE CONTROL OF A CENTRE-STEERED ARTICULATED VEHICLE AND A VEHICLE AND A CENTRE-STEERED ARTICULATED VEHICLE HEREFOR

The present invention relates to a method for facilitating driving a centre-steered articulated vehicle comprising a front vehicle part and a rear vehicle part which are centre-steered articulated about a common pivot journal and both of which include drive means. The invention also relates to a centre-steered articulated vehicle in which the method is applied.

With regard to the high speeds for which present-day centre-steered articulated vehicles are constructed, the steering properties of the vehicle are of an ever increasing significance, since the centrifugal forces to which such vehicles are subjected when negotiating curves can become so great as to cause the vehicle to skid or slip, particularly when driving on slippery roads. It will be understood that the ability of the driver to correct a skidding vehicle is of decisive significance in enabling the vehicle to be driven safely. Although a driver seated in the front vehicle part is conscious of the movements of said vehicle part, he is not immediately conscious of the movements of the rear vehicle part, and his judgement of the behaviour of the rear vehicle part in response to a steering manouevre is therefore based totally on experience. This lack of immediate knowledge of the movements made by the rear vehicle part, however, also limits the extent to which even an experienced driver can correct a skidding vehicle.

The present invention relates to a method for facilitating driving of a centre-steered articulated vehicle and of avoiding or at least substantially reducing the problems which accompany the aforesaid lack of immediate knowledge of the movements carried out by the rear vehicle part of a centre-steered articulated vehicle.

To this end, the invention provides a method of the kind described in the introduction which is characterized in that the driving force of the drive means of the front vehicle part is substantially greater than the driving force of the drive means of the rear vehicle part. As a result hereof, those side forces needed to cause the front vehicle part to slide or skid are considerably smaller than those side forces needed to cause the rear vehicle part to slide or skid, said rear vehicle part being influenced by considerably smaller driving and braking forces. The rear vehicle part will therefore normally follow the direction of movement of the front vehicle part, and consequently it sufficient for the driver to sense the movements of the front vehicle part in order to be able to prevent skidding of the vehicle.

The invention also relates to a centre-steered articulated vehicle comprising a front vehicle part and a rear vehicle part which are centre-steered articulated about a common pivot journal and which both include drive or power means, said vehicle being characterized in that the driving force of the drive means of the front carriage part is substantially greater than the drive force of the drive means of the rear vehicle part.

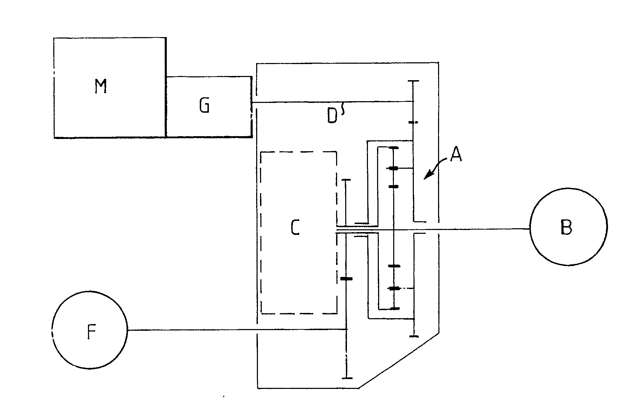

A preferred embodiment of a centre-steered articulated vehicle according to the present invention will now be described with reference to the accompanying drawing, which illustrates a drive arrangement for a centre-steered articulated vehicle.

The drawing illustrates a drive arrangement for a centre-steered articulated vehicle, comprising a power plant M connected to a gear box G and a drive means F and B for the front vehicle part and rear vehicle part respectively of a centre-steered articulated vehicle. Arranged between the gear box G and the drive means F and B is a differential A which distributes or splits the drive force from the drive axle D between the drive means F and B. In the case of the illustrated embodiment, the differential A is constructed so that 80% of the drive force from the power plant M is transferred to the drive means F of the front vehicle part and 20% to the drive means B of the rear vehicle part.

When negotiating a curve, a driven drive means such as a vehicle wheel or caterpillar belt will endeavour to continue "straight ahead" in the curve, and when driven at speeds at which the occurrent centrifugal forces lie in the proximity of the frictional forces between wheel or belt and the underlying road surface or like vehicle-supporting surface the drive means of both the front and the rear vehicle part will endeavour to move in an arc of greater radius than the steering radius, i.e. the radius that is contingent on the steering angle. Under such conditions, the steering properties of a centre-steered articulated vehicle where the drive forces on the wheels or belts of the front and the rear vehicle parts have the same values are highly dependent on the weight distribution between the front and the rear vehicle part, provided that the coefficients of friction against the vehicle-supporting surfaces are equal in respect of the drive means of said vehicle parts. In distinction hereto, the present invention is operative to cause the front vehicle part to endeavour to move in an arc of greater radius than the rear vehicle part when the vehicle negotiates a curve within the aforesaid speed-range, therewith causing the vehicle as a whole to tend to continue straight ahead in the curve. Furthermore, the greater driving force on the drive means of the front vehicle part will cause the centrifugal force necessary for the resultant of centrifugal force and drive force to actually cause the drive means of the front vehicle part to move in an arc of greater radius than the steering radius, to be much smaller than the corresponding centriful force acting on the rear vehicle part. Consequently, under all normal conditions, movements performed by the vehicle in a curve will be determined totally by the movements performed by the front vehicle part and the rear vehicle part will follow the movement direction of the front vehicle part. It will thus be seen that the influence of the rear vehicle part on the steering properties of the vehicle at high vehicle speeds is substantially eliminated by the invention and that the steering properties of an inventive centre-steered articulated vehicle will resemble the steering properties of an understeered front wheel drive vehicle. Because the rear vehicle part follows the movement direction of the front vehicle part, it suffices for the driver of an inventive vehicle to sense the movements of the front vehicle part in order to be able to steer the vehicle efficiently. The driver of an inventive vehicle thus has a much greater possibility of correcting skidding or slipping of the vehicle than in earlier known centre-steered articulated vehicles.

It will be understood that when selecting the ratios between the drive forces on the drive means of the front and rear vehicle parts respectively, it is necessary to take into account those variations that can occur in the forces acting on said drive means as a result of mutually different weights of the front and rear vehicle parts, the mutually different degrees of wind sensitivity of said two vehicle parts, etc. For instance, the centrifugal force acting on an unloaded vehicle part is smaller than the centrifugal force that acts on a fully loaded vehicle part, and consequently when choosing the relationship between the drive forces of the drive means of the front and rear vehicle parts respectively, it must be ensured that the desired steering properties are obtained for all conceivable combinations of unloaded and fully loaded vehicle parts respectively.

In the case of the illustrated embodiment, one and the same power plant M is used for driving both the front and the rear vehicle part, although it will be understood that the invention can also be applied to centre-steered articulated vehicles in which the front and the rear vehicle parts are each driven by a separate power plant. Furthermore, it may be convenient to provide a control device C for controlling the differential A and functioning to ensure that the differential is locked at low vehicle speeds, so that the drive force from the drive axle D can be transferred and uniformly distributed to the drive means F and B. The control device may optionally be constructed in a manner which will enable the relationship between the drive forces on the drive means of the front vehicle part and the drive means of the rear vehicle part to be varied. The control device C may be an automatically and/or a manually controllable device.

## Claims

1. A method for facilitating driving a centre-steered articulated vehicle comprising a front and a rear vehicle part which are centre-steered articulated about a common pivot journal and which both include drive means (F, B), **characterized** in that the drive means (F) or the front vehicle part is driven with a greater drive force than the drive means (B) of the rear vehicle part.

2. A centre-steered articulated vehicle comprising a front vehicle part and a rear vehicle part which are centre-steered articulated about a common pivot journal and which both include drive means (F, B), **characterized** in that the drive force on the drive means (F) of the front vehicle part is greater than the drive force on the drive means (B) of the rear vehicle part.

3. A vehicle according to Claim 1 having a drive power plant (M) which is common to both vehicle parts, **characterized** in that a differential (A) is connected between the power plant (M) and the drive means (F, B) of the front and the rear vehicle parts; and in that the differential (A) is constructed to transmit a larger drive torque to the drive means (F) of the front vheicle part than to the drive means (B) of the rear vehicle part.

4. A vehicle according to Claim 2 or 3, **characterized** in that the drive forces on the drive means (F) of the front vehicle part are four times greater than the drive forces on the drive means (B) of the rear vehicle part.

5. A vehicle according to Claim 3, **characterized** by a differential control device (C) which is constructed to lock the differential at low speeds, such that the drive force from the power plant (M) will be transferred to and uniformly distributed on the drive means (F, B) of the front and the rear vehicle parts respectively.

6. A vehicle according to Claim 3, **characterized** in that the differential (A) is constructed so that the relationship between the drive forces transferred to the drive means (F) of the front vehicle part and the drive forces transferred to the drive means (B) of the rear vehicle part can be varied; and in that a control device (C) is provided for controlling this relationship.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,Y | FR-A-2 501 142 (HOWARD) <br> * page 3, line 11 - page 4, line 22; figure 1 * <br> − − − | 1,2,3,5 | B 62 D 59/00 <br> B 62 D 53/00 <br> B 60 K 17/346 |
| A | WO-A-8 909 717 (NOERENS) <br> * page 1, line 10 - page 2, line 28 * * page 4, line 22 - page 5, line 21 * <br> − − − | 1 | |
| A,Y | US-A-4 662 472 (CHRISTIANSON ET AL.) <br> * column 3, lines 26 - 62; figures 1, 2 * * column 5, lines 44 - 56; figure 3 * <br> − − − | 2,3,5 | |
| A,Y | DE-A-3 520 887 (VOGEL & NOOT LANDMASCHINEN-FABRIK) <br> * page 3, line 1 - page 5, line 14 * <br> − − − | 2,3,5 | |
| A | DE-A-2 925 276 (BUCHER-GUYER) <br> * page 6, paragraph 2 - page 7, last paragraph * <br> − − − − − | 1-3,5 | |

|  |
|---|
| TECHNICAL FIELDS SEARCHED (Int. Cl.5) |
| B 60 K <br> B 62 D |

The present search report has been drawn up for all claims

| Place of search | Date of completion of search | Examiner |
|---|---|---|
| Berlin | 18 January 91 | BROYDE M P |